# EUROPEAN PATENT APPLICATION

(11) **EP 3 381 518 A1**
(43) Date of publication of application: **03.10.2018**
(21) Application number: 17188551.0
(22) Date of filing: 30.08.2017
(51) Int. Cl.: A62B 23/00, A41D 13/11, A62B 23/02

(54) **FILTER AND ITS MANUFACTURING PROCESS**

(30) Priority: 29.03.2017 TH 1703000536 U
(71) Applicant: Charumethee, Charnchai, 10130 Samut Prakan (TH)
(72) Inventor: Charumethee, Charnchai, 10130 Samut Prakan (TH)
(74) Representative: Cabinet Chaillot

(57) **Abstract**

A filter as described in the present invention comprises a textile filter on at least one position together with a structure on at least one position wherein the textile filter is assembled on the structure in the same direction or is protruded from said structure. The textile filter is folded into pleats in order to increase the contacting surface area of the textile filter. The filter manufacturing process comprises preparation with pleat folding of the textile filter, formation to assemble the structure with the textile filter, and quality improvement, to obtain a filter which has high resolution filtration textile filter, and low airflow resistance allowing air to flow through efficiently, providing comfort for user and low cost, fast and efficient manufacturing process.

## Description

### Field of invention

This invention is related to the field of filtration engineering, especially relates to a filter and its manufacturing process.

### Background of the invention

Air is the essential mixture for human life, as well known. The polluted air, contaminated with small particles, germs, heavy metals or chemicals, affects human life in various ways which can be fatal. Clean air is not only essential for human, but also for various types of engines or industries, wherein air is used as a part of reactions, storages or remedies. Therefore, air cleaning technologies or air filtrations are created and developed continuously and variously, in order to enhance ability to separate or destroy air contaminations, to increase amount of cleaner air to be sufficient for each types of usages, as described in the following examples of inventions:

The invention in the patent application 1201001383, "Mask", has described a mask which is prepared to reduce viral activity on the mask, even in condition which contains lipids and proteins, regardless of whether the virus is enveloped or not. The mask in the described invention can reduce viral activity on the mask wherein the particles which reduce viral activity comprising platinum(II) iodide, palladium(II) iodide, silver(I) iodide, copper(I) iodide and copper(I) thiocyanate.

The invention in the patent application 0401003372, "Disposable dust mask", has described a disposable dust mask, which is able to maintain adhesion force while being worn even when the mouth is moving. The straps are attached in the form that can maintain tensile strength and the length can be adjusted easily. The disposable dust mask comprises filter body, wherein contains filter at the front, and the upper and lower attach-wings which fold together with the front filter, and attach to the nasal ridge and jaw of the user. There are two guiding lines wherein the first unfold guiding line is on the side of the front filter in order to pilot the unfolding of the upper and lower attach-wings, and the second unfold guiding line is in order to pilot the unfolding of the upper and lower attach-wings. The upper and lower attach-wings will unfold along both unfold guiding lines depending on lips movement of the user. There are strap adjusting buckles attached to two side of filter body, and straps attached to the strap buckles and hung on the user.

The invention in the patent application 1201005864, "Sheet material for mask", has the aim to provide a sheet material for mask which is excellent in preventing adhesion of pollen. This described invention provides sheet material wherein the area of material is coated with coating which is silicon-based compound and cationic ion-type antistatic agent.

The invention in the patent application 1403001282, "Carbon air filter", has described a carbon air filter for sanitary mask which manufactured by automatic forming machine, comprising: the top layer filter consists of synthetic fibers, non-woven polypropylene spunbond; the first middle layer filter consists of carbon pellets or fine activated carbon pellets; the second middle layer consists of polyurethane foam or needle-punched; and the bottom layer filter consists of synthetic fibers, non-woven polypropylene spunbond. All parts are then attached to the four-layer components and assembled by the automatic forming machine.

The invention in the patent application 0301002372, "Casted filter with hot-welded main fibers and electrically charged microfibers", has described filter comprising 10 types of membrane sheet which get porous casted, and contain 12 types of hot-welded main fibers and 14 types of electrically charged microfibers which cannot be hot-welded. The casted membrane sheet is retained in the casted frame at least a part of it by welding between main fibers at the intersections of fibers. This membrane sheet can be casted in a mask-shape for the filtration.

Furthermore, there are other similar inventions of filter such as the invention in the patent application 1103000300 « Process for manufacturing polymer fibers with activated carbon for odor absorption", the invention in the patent application 0201001920 "Filter for air cleaning", the invention in the patent application 0501005135 "filtering sheet, mask or similar things that have bacteria adsorbing function", the invention in the patent application 1303000597 "Anti-pollution mask with mouth control switch", the invention in the patent application 0201004048 "Filtering mask with valves for exhalation containing multi-layer flaps which can be softened" or the invention in the patent application 0801005775 "Mask for female".

The former described inventions have demonstrated that inventions of filter for air filtration for breathing can be various such as the invention providing multi-layer filter or coating with chemicals for disinfection of germs which are stick on or pass through filter, or electrically charging for trapping particles or germs in the air.

However, the former described inventions of filter technology for air filtration of the mask are mostly invented from textile filter with low resolution filtration. The textile filter with high resolution filtration is mostly used in industries such as power plant, automobile, air filter, etc. Due to high cost of the textile filter with high resolution filtration, it is unlikely to be used as filter in mask production. Furthermore, high resolution textile filter has high airflow resistance, causing user to feel uncomfortable and encounter breathing difficulties while wearing.

The good filter should consist of textile filter with high resolution filtration and low airflow resistance in order to allow air to flow through efficiently, providing comfort for user and low cost, with fast and efficient manufacturing process.

### Summary of the invention

To solve the described problems, filter as described in the present invention comprises a textile filter on at least one position together with structure at least on one position wherein the textile filter is assembled with the structure in the same direction or protruded from the structure. The textile filter is folded into pleats in order to increase the contacting surface area of the textile filter. The filter manufacturing process comprises the preparation with pleat folding of the textile filter, formation to assemble the structure with the textile filter, and quality improvement.

This filter manufacturing process is to obtain a filter which has high resolution filtration textile filter, and low airflow resistance allowing air to flow through efficiently, providing comfort for user and low cost, with fast and efficient manufacturing process.

### Brief description of the drawings

FIG. 1 is illustrating a perspective view of one embodiment of the filter;
FIG. 2 is illustrating a front view of one embodiment of the filter;
FIG. 3 is illustrating a side view of one embodiment of the filter;
FIG. 4 is illustrating a top view of one embodiment of the filter;
FIG. 5 is illustrating a perspective view of one embodiment of the filter;
FIG. 6 is illustrating a front view of one embodiment of the filter;
FIG. 7 is illustrating a side view of one embodiment of the filter;
FIG. 8 is illustrating a top view of one embodiment of the filter;
FIG. 9 is illustrating a perspective view of one embodiment of the filter;
FIG. 10 is illustrating a front view of one embodiment of the filter;
FIG. 11 is illustrating a side view of one embodiment of the filter;
FIG.12 is illustrating a top view of one embodiment of the filter; and
FIG. 13 is illustrating one embodiment of the filter.

### Detailed description of the invention

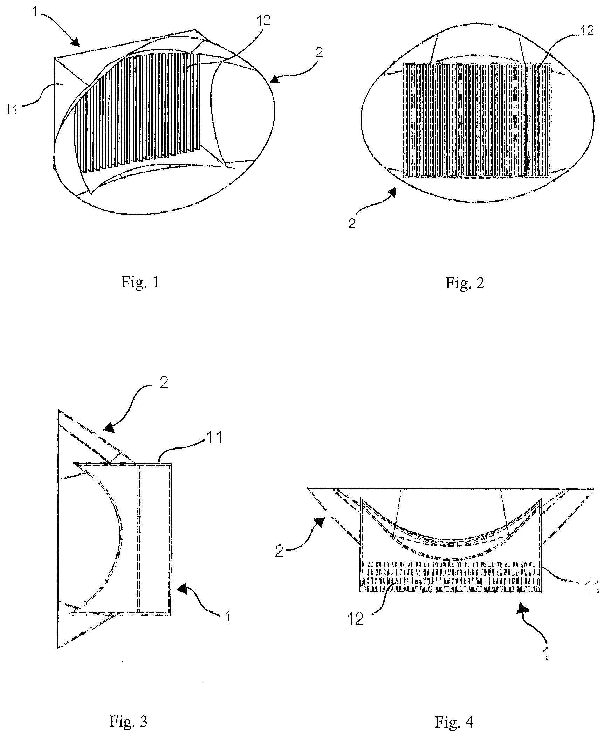

Figures from FIG. 1 to FIG. 4 illustrate perspective view, front view, side view and top view of one embodiment of the filter, respectively. Filter as described in the present invention comprises a textile filter (1) on at least one position together with a structure (2) on at least one position wherein the textile filter (1) is assembled with the structure (2) in the same direction or protruded from the structure (2).

Textile filter (1) in one embodiment is fabricated from filtering material from one hundred percent synthetic fibers (Fully Synthetics). In addition, according to this invention the suitable textile filter (1) contains a filter element (11) which passes through formation process to gain a set of pleats (12) in order to increase the surface area of filtration, providing low airflow resistance, allowing user to breath comfortably and trapping small particles efficiently.

The suitable pleats (12), according to this invention, are arranged in an up- down alternating pattern, alternating the filter element (11) up and down along all or a part of the length of textile filter (1). This does not restrict the pleats (12) in other different embodiments which alternate filter element (11) as in the purpose of this present invention, such as wavy pattern, etc.

In addition, textile filter (1) in one embodiment can be provided with multi-layer filtration or electrically charged to increase efficiency in small particles trapping, or chemical coated to prevent microbes, or the combination.

The structure (2) is base-like to support textile filter (1). The suitable structure (2), according to this invention, is arranged to be curved, covering nose of user while wearing. The structure (2) is made of natural polymers or synthetic polymers, especially plastic polymers such as LDPE plastic (LDPE: Low Density Polyethylene) or LLDPE plastic (LLDPE: Linear Low Density Polyethylene) or TPE plastic (Thermoplastic Elastomer) or EVA plastic (Ethylene Vinyl Acetate) or their combinations, for ease of injection molding of the filter according to this invention. This does not restrict the structure (2) in other different embodiments which are in the purpose of this present invention, such as fabric, etc. According to this invention, the textile filter (1) is assembled on the structure (2) on at least one position. In assembling with the textile filter (1), the cross-section area of the filter element (11) may be parallel to the horizontal plane, or may be curved to fit along the curve of structure (2), or the filter element (11) may be assembled with the structure (2) with the corresponding angles to the horizontal plane, or the combination.

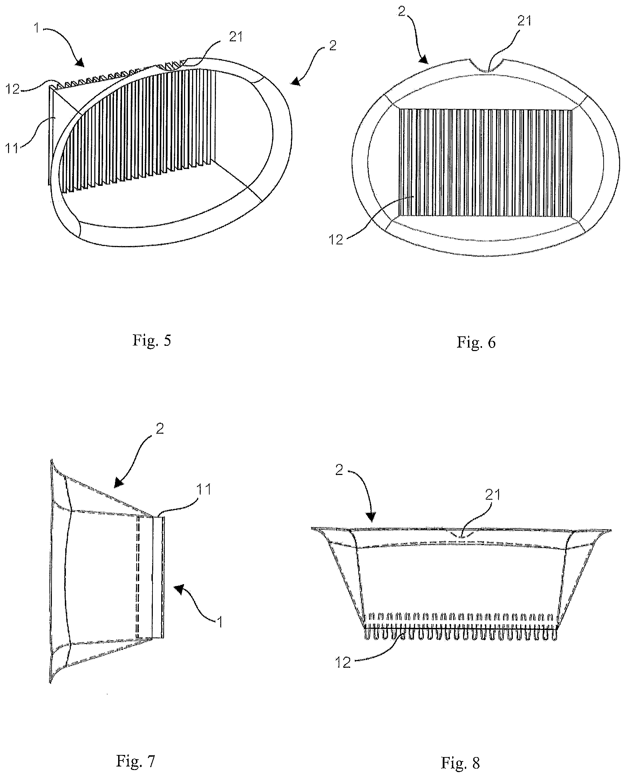

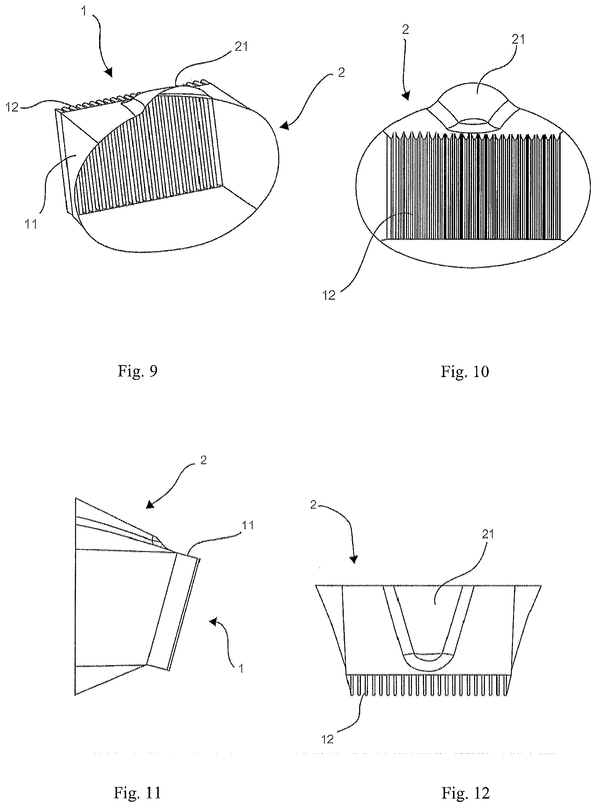

Furthermore, figures FIG. 5 to FIG. 12 illustrate perspective view, front view, side view and top view of one embodiment of the filter, respectively. The structure (2) in one embodiment is added with a nose cap (21) on at least one position at the edge of the structure (2). The nose cap (21) is concaved into the structure (2) from the edge of the structure (2), or convex from the edge of the structure (2), in order to support nose of user of the filter in this invention, causing the filter in this invention to attach to the face of user better.

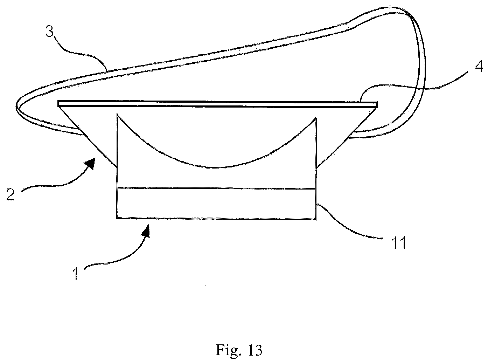

FIG. 13 illustrates one embodiment of the filter wherein the filter may be added with a holder (3) or a support (4) or their combination on at least one position. The holder (3) is in strip shape with the purpose of binding or holding on user's head. According to this invention, the suitable holder (3) is arranged to have one end of the holder (3) installed on one side of the structure (2), and another end of the holder (3) strung onto another side of structure (2).

The support (4) supports user's face while wearing the filter in this invention. The support (4) is made of soft materials from natural polymers or synthetic polymers or the combination such as rubber, sponge, foam, paper, fabric or the combination, etc., causing the filter to attach to the face of user while wearing, preventing friction or injury to happen to the face while wearing the filter. The suitable support (4) is arranged to be installed along all or a part of the edge of structure (2).

In addition, the filter in one embodiment may be added with valve which is installed on the structure (2) at least one position. The valve is a regular air check valve which allows air to flow in only one direction, in order to allow air to flow out from inside of the filter while being worn, providing better air circulation while using the filter in this invention.

The filter manufacturing process in the following is a method of the invention. This does not restrict the right action of any other filter manufacturing processes which are in the purpose of this present invention. According to this invention, the suitable filter manufacturing process comprising:
(a) The preparation of the textile filter (1), wherein the suitable textile filter (1) is preferably fabricated from one hundred percent synthetic fibers.
   Then the textile filter (1) is pleat folded with the arrangement of filter element (11) in up-down alternating pattern for all or some part of textile filter (1), providing textile filter (1) with pleats (12) at the filter element (11) for the next process.
   According to this invention, the preparation in one embodiment as may also comprise multi-layer filtration or electrical charging of the textile filter (1) to increase efficiency in trapping small particles, or chemical coating to prevent microbes, or the combination, before the pleat folding.
   Furthermore, the following qualifications of the textile filter (1) may be provided. The textile filter (1) may be able to filter fine particles smaller than 0.3 microns and better than 99.8%, according to HEPA standard (HEPA: High Efficiency Particulate Air), and have airflow resistance of 5.5 millimeters of water. This does not restrict the textile filter (1) in other different types which is in the purpose of this present invention.
(b) The formation process begins with inserting pleated textile filter (1) from process (a) into the mold which is arranged as the structure (2) in various embodiments. Then the material is injected into the mold in one embodiment and formed into a shape of structure (2) which assembled with the textile filter (1) on at least one position. The textile filter (1) is assembled with the structure (2) in the same direction or protruded from the structure (2), while the cross-section area of the filter element (11) is parallel to the horizontal plane, or curve to fit along the curvature of structure (2), or the filter element (11) may be assembled with structure (2) with the corresponding angles to the horizontal plane, or the combination.
   The suitable material of structure (2) can be natural polymers or synthetic polymers, especially plastic polymers such as LDPE plastic, LLDPE plastic, TPE plastic, EVA plastic or their combination.
(c) The quality improvement complements the qualification of the filter according to this invention. According to this invention, the suitable quality improvement is to preferably assemble the filter from process (b) with the holder (3) which is in strip shape. The suitable holder (3) is arranged to have one end of the holder (3) installed on one side of the structure (2), and another end of the holder (3) strung onto another side of structure (2) for the purpose of binding or holding on user's head. In addition, the quality improvement in one embodiment may include the support (4) on at least one position to support the face of user. The suitable support (4) is arranged to be installed along all or a part of the edge of structure (2).

To obtain the filter with high resolution filtration and less airflow problem, which causes by mentioned high resolution filtration of textile filter (1), there is a pleat folding to increase the contacting surface area wherein said contacts with the external air, allowing air to flow in and out easily.

Any modification of this invention may be clearly understood and performed by those experts with skills in the related arts or related fields. This may be subjected to the scope and intent of this present invention as described in the claims attached.

The best method of invention is as described in detailed description of the invention.

## Claims

1. A filter comprising a textile filter (1) with a base-like structure (2) on at least one position, and wherein:
- the textile filter (1) comprising a filter element (11) with a set of pleats (12) which are arranged in an up-down, alternating pattern on filter element (11) along all or some part across the length of textile filter (1); and
- the textile filter (1) is assembled on the structure (2) on at least one position.

2. A filter manufacturing process comprising as follows:
- preparing a textile filter (1) by pleat folding to create an arrangement of a filter element (11) in up-down alternating pattern along all or some part of said textile filter (1);
- forming by inserting a pleated textile filter (1) from the first step into a mold which is arranged as a structure (2), injecting material for the structure (2) into the mold, forming the structure (2) which is assembled with the textile filter (1) on at least one position; and
- quality improving by complementing the filter from the second step with a strip shape holder (3).

3. The filter according to claim 1, wherein textile filter (1) is assembled on structure (2) with the filter element (11) arranged in the same direction or protruded from the structure (2).

4. The filter according to claim 1 or 3, wherein the structure (2) is assembled together with the textile filter (1) while the cross-section area of the filter element (11) is parallel to the horizontal plane, or curve to fit along the curvature of the structure (2), or the filter element (11) is assembled together with the structure (2) with the corresponding angles to the horizontal plane, or their combination.

5. The filter according to one of claims 1, 3 and 4, wherein the textile filter is fabricated from filtering material from one hundred percent synthetic fibers.

6. The filter according to one of claims 1 or 3 to 5 wherein the structure (2) is made from natural polymers or synthetic polymers, especially plastic polymers such as LDPE plastic, LLDPE plastic, TPE plastic or EVA plastic.

7. The filter according to one of claims 1 or 3 to 6, wherein the structure (2) is added with a nose cap (21) on at least one position at the edge of the structure (2), concave into the structure (2) from the edge of the structure (2) or convex from the edge of the structure (2).

8. The filter according to one of claims 1 or 3 to 7, wherein the filter is added with the holder (3) which is in the strip shape or valve, or the support (4), or the combination.

9. The filter manufacturing process according to claim 2, wherein the textile filter (1) is assembled on structure (2) with the filter element (11) arranged in the same direction or protruded from the structure (2) and/or
wherein the structure (2) is assembled together with the textile filter (1) while the cross-section area of the filter element (11) is parallel to the horizontal plane or curve to fit along the curvature of the structure (2), or the filter element (11) is assembled together with the structure (2) with the corresponding angles to the horizontal plane, or their combination.

10. The filter manufacturing process according to claim 2 or 9, wherein the step of preparing comprises adding on textile filter (1) with multi-layer filtration, electrical charging, or chemical coating to prevent microbes, or their combination.

11. The filter manufacturing process according to claim 2, 9, or 10, wherein the step of quality improving comprises a support (4) installation on at least one position along all or a part of the edge of structure (2).

12. The filter manufacturing process according to one of claims 2 or 9 to 11, wherein the textile filter is fabricated from filtering material from one hundred percent synthetic fibers.

13. The filter manufacturing process according to one of claims 2 or 9 to 12, wherein the structure (2) is made from natural polymers or synthetic polymers, especially plastic polymers such as LDPE plastic, LLDPE plastic, TPE plastic or EVA plastic.

14. The filter manufacturing process according to one of claims 2 or 9 to 13, wherein the structure (2) is added with a nose cap (21) on at least one position at the edge of the structure (2), concave into the structure (2) from the edge of the structure (2) or convex from the edge of the structure (2).

15. The filter manufacturing process according to one of claims 2 or 9 to 14, wherein the filter is added with the holder (3) which is in the strip shape or valve, or the support (4), or the combination.
